# EUROPEAN PATENT SPECIFICATION

(11) **EP 1 982 538 B1**
(45) Date of publication and mention of the grant of the patent: **03.09.2014**
(21) Application number: 07710290.3
(22) Date of filing: 24.01.2007
(51) Int. Cl.: H04W 4/12, H04W 72/00

(54) **System, mobile station and method for use in cellular communications**
System, Mobilstation und Verfahren zur Verwendung bei der zellularen Kommunikation
Système, station mobile et procédé à utiliser dans le cadre de communications cellulaires

(30) Priority: 31.01.2006 GB 0601891
(43) Date of publication of application: 22.10.2008
(73) Proprietor: Motorola Solutions, Inc., Schaumburg IL 60196 (US)
(72) Inventor: CHATER-LEA, David, J., Basingstoke Hampshire RG22 4PD (GB)
(74) Representative: Treleven, Colin
(86) International application number: PCT/US2007/060967
(87) International publication number: WO 2007/090016

(56) References cited:
- EP-A- 1 445 971
- WO-A-01/47293
- WO-A-03/065751
- US-A- 5 850 611
- US-A- 5 970 417

## Description

### FIELD OF THE INVENTION

The present invention relates to a system, a mobile station and a method for use in cellular communications. In particular, the invention relates to selection and attachment to cells of the system by mobile stations operating in the system particularly for group calls.

### BACKGROUND OF THE INVENTION

A cellular communication system is one in which mobile or portable user terminals such as mobile telephones or portable radios, herein collectively referred to as 'mobile stations' or 'MSs', can communicate via a network infrastructure which generally includes various fixed installations such as base transceiver stations or 'BTSs'. Each BTS has one or more transceivers which serve MSs in a given region or area, known as a 'cell' or 'site', by radio communication. The cells of neighbouring BTSs arc often overlapping. Signals sent from MSs to their serving BTS are known as 'uplink' signals. Signals sent from a BTS to MSs are known as 'downlink' signals. Uplink and downlink signals may be sent on different channels, e.g. with different carrier frequencies. A cellular system may also be a trunked system in which radio channels of the system are shared between user terminals and each channel is assigned for a particular communication for a temporary period only.

Generally, it is desirable in a cellular system for the MSs to be served by the cell which can provide the best service, i.e. the cell whose BTS can send and receive the strongest signals to and from the MS. However, conditions may be imposed by the system on the cells to which each of the MSs is allowed to be attached for service, e.g. as described later.

In a cellular/trunked radio system, for example one used by professional organisations such as the police and the fire services, it is common to provide group calls between three or more MSs at the same time. The groups involved are known in the art as 'talk groups', even though the information that may be communicated may include various forms of data as well as speech. Traffic signals for such groups, i.e. signals carrying communicated user information such as speech or data, as well as the control signals needed to set up and maintain the group call, can be spread over several cells of the system. When a MS sets up a group call, the MS communicates through its serving BTS, which (as noted earlier) will normally be a BTS selected by the MS as the BTS capable of providing the best communication link. Subsequently, signals relating to the call are carried on every cell of the system where there is present another MS that is a member of the talk group. Where a talk group involves a large number of MSs, this can lead to unduly large capacity demands on the system, since more cells need to use capacity to carry calls than is desirable for an efficient operation of the system.

It is known to limit system capacity used by a talk group by steering MSs of the talk group to certain preferred cells (i.e. to certain preferred BTSs at the centre of such cells) by storing a list of these preferred cells in a memory of the MS. The list of such preferred cells is known as a 'Home Location Area' (HLA) or 'Preferred Site' list. If a MS has a HLA list recorded in its memory, it will attempt to attach to (be served by) one of the cells specified in the HLA list, herein called 'HLA cells', in preference to all others. The MS may be in a class of MSs which is permitted to attach only to a HLA cell for the group call. This steering of the MS to HLA cells may be disadvantageous however. For example, situations can arise in which the MS will stay attached to a particular HLA cell which is providing a poor communication link instead of moving to a better cell. In any case, network based restrictions which have been applied may prevent the MS moving to a better cell. These restrictions can cause user dissatisfaction as the system may appear to be providing poor communication service.

WO 01/47293 shows an arrangement where cells for use by a call group can be updated during a call, based on information from mobile terminals that are actually participating in the group call.

### SUMMARY OF THE INVENTION

### SUMMARY OF THE INVENTION

According to the present invention, in a first aspect, there is provided a cellular communication system as defined in claim 1 of the accompanying claims.

According to the present invention, in a second aspect, there is provided a method of operation in a cellular communication system, the method being as defined in claim 15 of the accompanying claims.

Further features of the invention are defined in the accompanying dependent claims and are disclosed in the embodiments of the invention to be described.

Embodiments of the present invention will now be described by way of example with reference to the accompanying drawings, in which:

### BRIEF DESCRIPTION OF THE DRAWINGS

FIG. 1 is a block schematic diagram illustrating a cellular communication system which may be adapted in accordance with embodiments of the invention.
FIG. 2 is a block schematic diagram illustrating a mobile station of the system of FIG. 1.
FIG. 3 is a flowchart of a method of operation embodying the invention for use in the system of FIG. 1.
FIG. 4 is a flowchart of an alternative method of operation embodying the invention for use in the system of FIG. 1.

### DESCRIPTION OF EMBODIMENTS OF THE INVENTION

In embodiments of the invention to be described, a cellular communication system includes a plurality of mobile stations and a system infrastructure operable to support communications between the mobile stations, the infrastructure being organized in a plurality of cells such that each of the mobile stations is served by a selected one of the cells, wherein each of the mobile stations is operable to select for service for group communications with a pre-defined group of the mobile stations a cell which is in a list of preferred cells selected by the infrastructure according to a

distribution of mobile stations of the group among cells serviced by the infrastructure, wherein a processor of the infrastructure is operable dynamically to update the list of preferred cells according to current system conditions and to notify mobile stations of the group of the updated list. The processor may be operable to update the list of preferred cells when one of the mobile stations of the group has been unable to receive service from any of the cells of its preferred list and is receiving service from a cell which is not on the preferred list, the update thereby including that cell in the updated list. The processor may be operable to provide the dynamic update in response to receiving information from at least one of the mobile stations of the group relating to the quality or strength of signals received from cells of the system.

By the processor of the infrastructure being able to dynamically update the list of preferred cells the following benefits are provided: (i) service links to MSs that are to take part in group calls may be improved without unduly overloading the system with control and traffic signals sent to and from such MSs; and/or (ii) the operational efficiency of the system may improved according to currently operational conditions, without unduly reducing the service links to MSs. A detailed description of examples of a system, mobile station and method employed to provide such benefits will now follow.

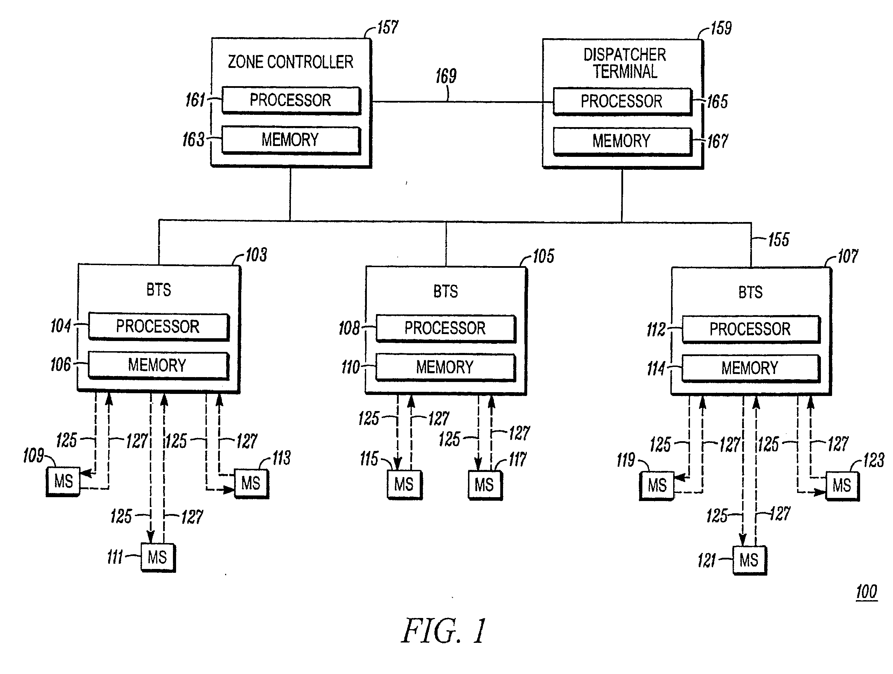

FIG. 1 is a block schematic diagram showing an illustrative a cellular communication system 100 which may be adapted to operate in accordance with embodiments of the present invention. The system 100 may for example be a TETRA system, i.e. may employ operating procedures which are in accordance with the TETRA standard as defined by ETSI (European Telecommunications Standards Institute), although the invention is not limited to application in TETRA systems. Alternative systems in which the invention may be used are disclosed later. The system 100 includes a plurality of BTSs (base transceiver stations). In particular, FIG. 1 shows three particular BTSs 103, 105 and 107. The BTS 103 includes a processor 104 and a memory 106. The BTS 105 includes a processor 108 and a memory 110. The BTS 107 includes a processor 112 and a memory 114. The BTSs of the system 100, including the BTSs 103, 105 and 107, define a set of overlapping service cells or sites to which MSs operating in the system 100 are served or attached. The processor 104 of the BTS 103 provides control, authentication, encryption, routing and other known operational functions of the BTS 103. The processor 104 operates in conjunction with the memory 106 which stores data and programs needed in operation by the processor 104. The processor 108 and the memory 110 provide respectively functions similar to those of the processor 104 and the memory 106. The processor 112 and the memory 114 provide respectively functions similar to those of the processor 104 and the memory 106.

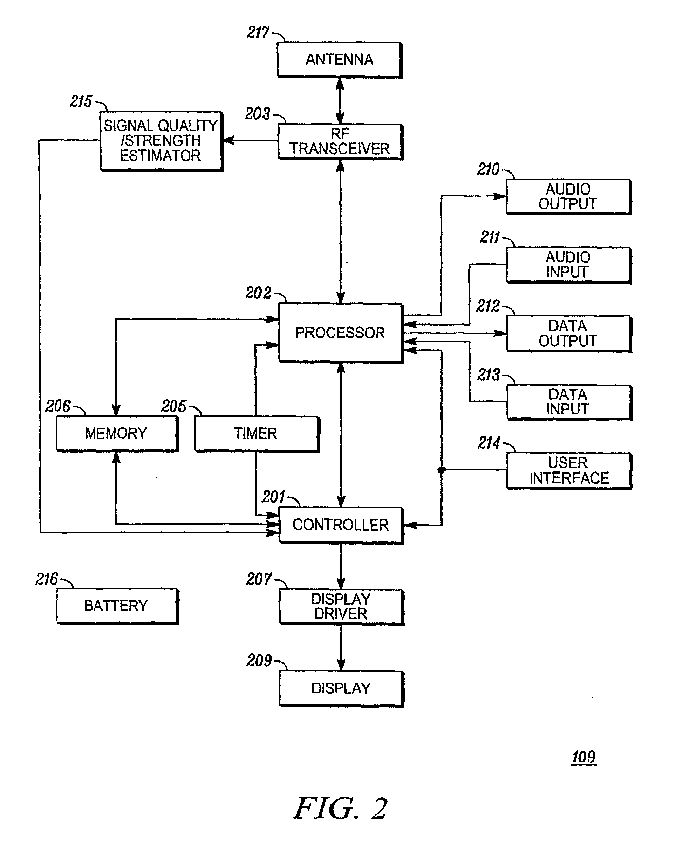

The system 100 also includes a plurality of mobile stations, MSs, several of which are shown, namely MSs 109, 111, 113, 115, 117, 119, 121 and 123. Each of the MSs has an uplink and a downlink with one of the BTSs which is its serving BTS. The downlink for each of the MSs 109 to 123 is indicated by reference numeral 125 and the uplink for each of the MSs 109 to 123 is indicated by reference numeral 127. The MSs 109, 111 and 113 are shown linked to the BTS 103 for service, e.g. to provide radio communication links for each of these MSs with other MSs of the system 100 (including links made via other BTSs of the system 100). The MSs 115 and 117 are shown linked to the BTS 105 for service. The MSs 119, 121 and 123 are shown linked to the BTS 107 for service. Further details of the MSs 109 to 123 arc described later with reference to FIG. 2.

The BTSs 103, 105 and 107 have a network of broadband links with each other and with other sub-systems of the system 100. This network of broadband links is indicated by reference numeral 155. The system 100 also includes a zone controller 157 which includes a processor 161 and a memory 163 and is connected to the BTSs 103, 105 and 107 by the network 155 of broadband links. The zone controller 157 provides by the processor 161 operational control of the BTSs 105, 107 and 109 and other BTSs (not shown) which are in a given zone of the system 100, which is a given set of the overlapping cells or sites. The memory 163 of the zone controller 157 may for example store a database of details relating to mobile stations operating in the system 100 as well as data and programs needed in operation by the processor 161.

A dispatcher terminal 159 including a processor 165 and a memory 167 is connected to the zone controller 157 by a link 169 which may be a wired or wireless link. The dispatcher terminal 159 is also connected to the BTSs 103, 105 and 107 by the network 155. The dispatcher terminal 159 is a fixed terminal located in a control centre of an organisation using the communication system 100. The dispatcher terminal 159 may for example be used for communications by a person, known as a 'dispatcher', who is providing operational instructions to mobile members of the organisation controlled from the control centre who are users of the MSs 109 to 123.

The components of the system 100 other than the mobile stations, e.g. MSs 109 to 123, form a fixed system infrastructure for providing communication links between the mobile stations. In the description of embodiments of the invention given later, the zone controller 157 and its processor 161 and memory 163 carry out certain operational functions on behalf of the infrastructure of the system 100. This is illustrative rather than limiting, since the architecture of the system 100 can vary in different system types. It will be readily apparent to a person skilled in the art that in some system types the operational functions described herein as carried out within the zone controller 157 may be carried out by another sub-system component, typically including a processor and a memory, of the infrastructure of the system 100.

FIG. 2 is an exemplary block schematic diagram showing functional components of the MS (mobile station) 109. The other MSs 111 to 123 shown in FIG. 1 have a similar construction and operation. The MS 109 includes a controller 201 which controls functional operations of the MS 109. A processor 202 operably connected to the controller 201 processes information sent to and from the MS 109. The controller 201 and the processor 202 are operably connected to a timer 205 which provides operational synchronisation and timing and to a memory 206 which stores data and programs needed in operation by the controller 201 and the processor 202.

The processor 202 is operably connected to a radio frequency (RF) transceiver 203 which is connected in turn to an antenna 217. The transceiver 203 transmits and receives RF signals including signals carrying user information sent to and from the MS 109. The signals are delivered over the air to and from the antenna 217.

When the RF transceiver 203 via the antenna 217 receives an RF signal including information representing communicated speech, the processor 202 extracts the information and may deliver a signal including the extracted information to an audio output 210 which comprises a transducer such as a speaker which converts the signal to audio form to reconstruct the communicated speech for a user of the mobile station 109. The MS 109 also may include an audio input 211 which comprises a transducer such as a microphone which converts speech of the user into the form of an electrical signal and delivers the signal to the processor 202 which processes the signal into a form suitable for inclusion in a RF signal for transmission by the transceiver 203 via the antenna 217.

When the RF transceiver 203 receives via the antenna 217 a signal representing communicated (non-speech) data, e.g. alphanumeric characters representing words or numerals or picture or video information, the processor 202 extracts information relating to the communicated data and may deliver a signal including the extracted data to a data output 212. The data output 212 may for example comprise a connection to an external data processing terminal (not shown), e.g. a personal computer.

A data input 213 may be provided to enable an input signal from a user including data to be communicated. The data input 213 may for example comprise a connection to a data source, e.g. an external data processing terminal such as a personal computer (not shown). The signal provided by the data input 213 is delivered to the processor 202 which processes information included in the signal into a form suitable for inclusion in a RF signal to be transmitted by the RF transceiver 203 via the antenna 217.

The MS 109 may include a user interface 214, e.g. a keypad and control buttons, which allows a user to enter instructions and data into the MS 109. The user interface 214 is operably connected to the controller 201 to receive signals representing instructions entered by a user at the user interface 214. The user interface 214 is also operably connected to the processor 202 to enable a signal representing data entered by the user at the user interface 214 to be delivered to the processor 202. The processor 202 processes data included in the signal into a form suitable for inclusion in a RF signal to be transmitted by the RF transceiver 203 via the antenna 217.

The MS 109 may include a signal quality or strength estimator 215 connected to the RF transceiver 203 and to the controller 201. The estimator 215 samples incoming signals received by the transceiver 203 and, in a known manner, estimates a quality or strength of the signal. Results of the estimates of signal quality or strength made by the estimator 215 are provided to the controller 201 and may, for example, be used by the controller 201 in selection of cells of the system 100 for attachment for service.

The MS 109 may include an electro-optical display 209 operable to display information to a user in a known manner. The display 209 is driven by a display driver 207 under control of signals from the controller 201.

The MS 109 may include a battery 216 which provides a source of electrical energy for all active components of the MS 109.

In normal operation, the MS 109 is served by the cell which provides the best signal as determined by the controller using measurements by the estimator 215. Thus, as shown in FIG. 1, the MS 109 is served by the BTS 103 because the BTS 103 is closest to the BTS 103. However, if the MS 109 moves, e.g. closer to a BTS of another cell, the controller 201 operates a procedure to determine whether another BTS is better for the MS 109 to attach to for service. The procedure is known as 'cell re-selection' and involves the estimator 215 measuring the signal quality or strength from a number of potential cells (BTSs), including the current serving cell (BTS 103), and the controller 201 using the measurements in a known way to determine the most appropriate cell. If another cell, e.g. that of the BTS 105, is selected as a result of the cell re-selection procedure, the MS 109 undergoes a change known as 'handover' or 'handoff' in which its serving cell is switched from that of the BTS 103 to the newly selected cell, e.g. that of the BTS 105, and the MS 109 begins to receive communication service from the (BTS of the) newly selected cell.

The memory 206 builds up and stores from the results of monitoring by the estimator 215 signals from candidate serving cells a list of cells which should normally be tried when a cell re-selection procedure is operated.

The MS 109 may take part in a group call with at least two other MSs operating in the system 100. The MSs participating in such a call are referred to herein as a 'talk group' (although data as well as speech may be communicated in such a 'call'). The talk group may be one which has been set up by a dispatcher using the dispatcher terminal 159. Data defining the talk group and the MSs which are members of the talk group may be stored in a memory of the system 100, for example the memory 163 of the zone controller 157 and optionally also the memory 167 of the dispatcher terminal 159. The talk group may include MSs that are attached to a large number of different cells. However the number of cells used in a group call by the talk group are limited in the manner described earlier by the use of a HLA list which has been stored in the memory 206 of the MS 109 and each of the other MSs of the talk group.

The HLA list for each talk group of each MS of the system 100 is generated for example by a processor of the system 100, e.g. the processor 161 of the zone controller 157, using information about the usual location of each MS in the memory 163. The HLA list for a talk group may be a single list for all MSs which are members of the same talk group as set by the system 100. Alternatively, different HLA lists may be used by different MSs or sets of MSs within the talk group as set by the system 100. The HLA list for each talk group of each MS is recorded in a database of the system 100, e.g. in the memory 163 of the zone controller 157 and optionally in the memory 167 of the dispatcher terminal 159.

The HLA list stored by the memory 206 of the MS 109 may be the same for all talk groups of which the MS 109 MS is a member. Alternatively, multiple HLA lists associated with different talk groups of which the MS 109 is a member, or different sets of talk groups of which the MS 109 is a member, may be stored by the memory 106.

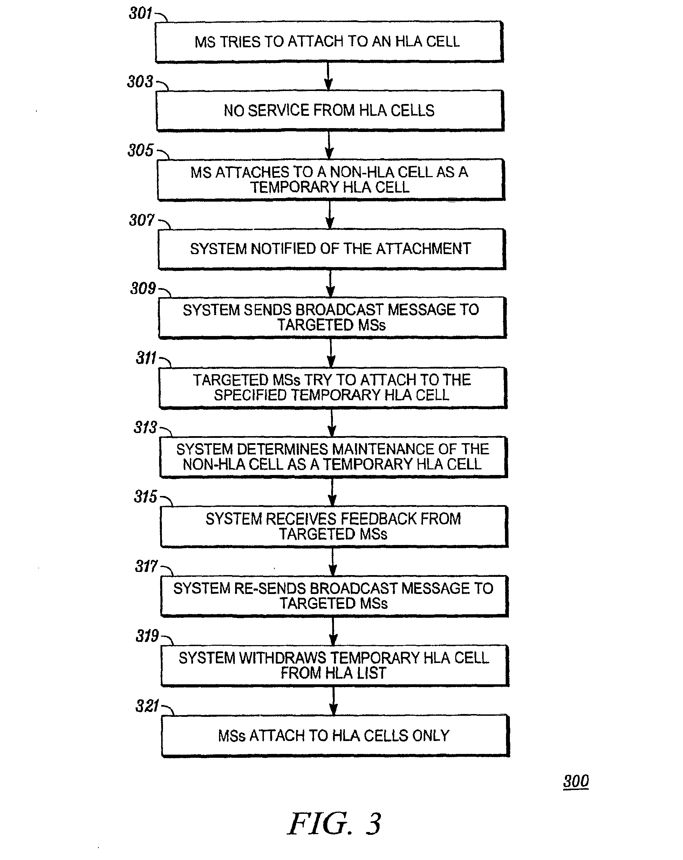

FIG. 3 is an exemplary flowchart of a method 300 of operation embodying the invention for use in the system 100. Initially, in a step 301, when a given group call is being set up amongst a given talk group (initiated by one MS of the talk group) each MS of the given talk group tries to attach to a HLA cell, i.e. a cell included in its HLA list, if it is not already attached to such a cell. Thus, for example, the controller 201 of the MS 109 will cause the MS 109 to try to attach for service to one of the cells in the HLA list of cells stored in the memory 206 of the MS 109. For example, the cell of the BTS 103 may be a non-HLA cell, i.e. a cell that is not included in the HLA list of the MS 109 stored by the memory 206 of the MS 109 for the given group call, whereas the cell of the BTS 105 may be an HLA cell. Thus, for the given group call, the MS 109 will normally try to attach for service to the cell of the BTS 105 or one of the other cells in its HLA list for that given group. However, the MS 109 might not be able to obtain service from any of its HLA cells for the given group, as indicated in step 303. In this event, the HLA list of the MS 109 is allowed to change temporarily and the MS 109 is allowed, in a step 305, to select a neighbouring cell of the system 100 that is a non-HLA cell, but is included as a temporary entry in the HLA list for the given talk group. Such a cell is referred to herein as a 'specified cell'. For example, the cell of the BTS 103 may be a specified cell and the MS 109 may attach for service to the cell of the BTS 103.

The system 100 is notified in a step 307 of the attachment of the MS 109 to the specified cell of the BTS 103 which is not normally an HLA cell for the given group call. This is detected and reported for example by the processor 104 of the BTS 103 and is notified for example to the processor 161 of the zone controller 157 which records the attachment in the database held by the memory 163.

In consequence, in a step 309 the system 100 issues a message to targeted MSs notifying them of a temporary HLA list change. For example, the zone controller 157 sends the targeted message to other MSs that are members of the given talk group that are currently receiving service or attempting to receive service on cells adjacent to the specified normally non-HLA cell which has been selected by the MS 109. For example, the message may be sent to other MSs of the given talk group that are normally attached to the cell of the BTS 103 but are currently attached to the BTS 105 because of the restrictions applied by their HLA list. The targeted other MSs may include for example the MS 111 and the MS 113. The message informs each of the targeted other MSs that receive the message that the specified non-HLA cell, e.g. the cell of the BTS 103, may now be temporarily added to the MS's HLA list and thereby used as a temporary HLA cell by those other MSs, if required, for the given group call.

The targeted broadcast message sent in step 309 may be sent for example by the zone controller 157. The message may have a pre-determined format which is understood by the receiving MS. The message may include target addresses for each of the targeted MSs, e.g. an ID code identifying each of the targeted MSs, so that the message is sent only to targeted MSs rather than all MSs of the system 100. The message may for example be a PDU (protocol data units) message and may be sent on a control channel, e.g. the main control channel, of the system 100. Alternatively, the message may be sent in signalling opportunities on a traffic channel, such as a Fast Associated Control Channel, a Slow Associated Control Channel or by use of frame stealing.

The broadcast message may include a parameter to indicate to the targeted MSs that the HLA list change is a temporary change, and, at some time in the future, the specified cell may be withdrawn from the HLA list, thereby leaving the targeted MS with its original HLA list of cells only. The message may include a timer value which allows the targeted MS to store the specified non-HLA cell as a temporary entry in its HLA list for the given group only until the timer value expires.

In a step 311 the targeted other MSs, e.g. the MSs 111 and 113, may attempt to provide their users with better service by attaching for service to the specified cell of the BTS 103 (following a cell re-selection procedure including that cell). There will be no impact on traffic loading of the specified non-HLA cell of the BTS 103 if the additional MSs 111 and 113 join that cell, since the attachment of the first MS of the given talk group, i.e. the MS 109, to that cell will already require group call traffic relating to the given group call to be carried on the cell.

The temporary allocation of the specified non-HLA cell, e.g. the cell of the BTS 103, to the HLA list for the given group call may be modified, limited or withdrawn by the system 100. Thus, as indicated in a step 313, the system 100 determines what maintenance of the allocation of the specified cell as a temporary HLA cell shall be applied. The system 100, for example the zone controller 157, may apply step 313 in various ways which include but are not limited to:
(a) removing the specified cell as a temporary addition to the HLA list for MSs which are members of the given group when the MS 109 (which was the original MS to join the cell) leaves the cell;
(b) maintaining the specified cell as a temporary HLA list addition for MSs of the given group until all MSs that are members of the given group have left the cell;
(c) transmitting a timer value to targeted MSs that are members of the given group together with the temporary HLA allocation, whereupon when the timer expires:
   (i) the MSs will leave the cell; or
   (ii) each MS which has attached to the specified cell may check to see if other cells provide service and may re-attach to the temporarily allocated cell if no other cell is able to provide service.

The system 100 may determine whether the temporary addition of the specified cell to the HLA list of MSs may be maintained, by using feedback from the MSs as indicated by a step 315. For example, the MS 109 may indicate to the BTS of the specified non-HLA cell, e.g. the BTS 103, whether it can or cannot obtain service on any other cell. If the MS 109 cannot receive service on any other cell, it may periodically update the BTS 103 of the specified non-HLA cell with messages indicating that it continues not to have any alternative cell attachment options. The BTS 103 may relay messages including this information to the system 100, e.g. the zone controller 157. The system 100, e.g. the zone controller 157, may use the periodic updates to determine whether all MSs of the given group that attached to the specified non-HLA cell arc able to provide service on other cells which arc in their normal HLA list, and so may withdraw the allocation of the specified cell as a temporary HLA cell when this determination is made.

The feedback updates from each of the MSs provided in step 315 may include an indication of signal quality or signal strength concerning signals from the BTSs of cells on its HLA list. These indications are measurements obtained by the signal quality or strength estimator 215 of the MS. The system 100, e.g. the processor 161 of the zone controller 157, may use this information to determine whether to maintain or withdraw the temporary allocation to the HLA list of the specified cell. For example, if MSs of the specified group can obtain service on other cells that are HLA cells, but the service as indicated by the signal quality of strength values is only of poor quality, the system 100 may decide to maintain the specified non-HLA cell as a temporary HLA cell.

The system 100, e.g. acting through the zone controller 157, may also use the periodic updates from relevant MSs to repeat in a step 317 the broadcast message sent to targeted MSs as sent earlier in step 309. The system 100 may also use the periodic updates to reset a timer value which the targeted MSs are to use for temporary inclusion of the specified cell in the HLA list of the MSs to determine whether the MSs are allowed to remain attached to the specified cell.

In a step 319, the system 100 may withdraw the temporary HLA cell from the HLA list to return to normal operation, i.e. operation without any temporary HLA cells. The system 100 (e.g. processor 161) may apply step 319 when a pre-defined event occurs. The pre-defined event may for example be at least one of:
(i) expiry of a pre-determined time period;
(ii) one or more of the MSs ceasing to be served by a cell which was newly included in the updated list of preferred cells.

At the end of a period during which a temporary change to the list of HLA cells has applied, the MSs served by a cell which was newly included in the updated list of preferred cells are to seek service by one of the cells of the previous preferred list, i.e. the 'normal' HLA list, rather than the newly added cell in the temporarily changed list. Thus, in a step 321 MSs may become attached only to HLA cells in normal operation.

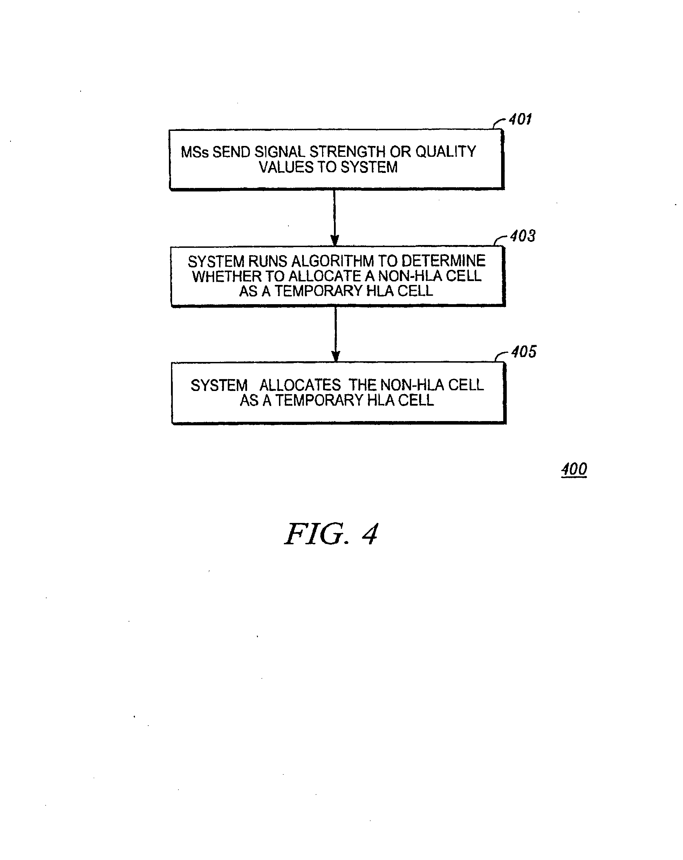

The allocation of a specified non-HLA cell as a temporary HLA cell may in an alternative method 400 embodying the invention be initiated by the system 100. This alternative method 400 is illustrated in FIG. 4. When a given group call of a given group of MSs is being established, each MS of the given group, or each MS of the group having difficulty in attaching to a cell in its HLA list, sends in a step 401 a signal to the system 100, e.g. to the zone controller 157 via one of the BTSs 103 to 107, indicating signal quality or signal strength the MS is receiving, as measured by the estimator 215, from various cells including cells on the HLA list and, if appropriate, one or more neighbouring cells not on the HLA list for the given group. In a step 403, the system 100 runs an algorithm, e.g. in the processor 161 of the zone controller 157, to determine whether to allocate a non-HLA cell as a temporary HLA cell. For example, the system 100 may determine if a minimum number of MSs of the given group can obtain only poor service quality from the cells on their HLA list, but a neighbouring non-HLA cell can be identified that would offer better service to this number of MSs. If the system 100 determines in step 403 that a specified non-HLA cell should be allocated as a temporary HLA cell, the system 100 allocates this specified non-HLA cell as a temporary HLA cell in step 405 to offer better overall service to the users. The method 400 may then proceed in the same manner as in steps 309 onward in the method 300 illustrated in FIG. 3.

The method 300 or the method 400 may be applied to allocate temporary HLA status to a multiplicity of specified cells of the system 100. Furthermore, the system 100 may withdraw one or more cells from the normal HLA list of cells stored by MSs, e.g. where the system 100 determines that few MSs are to be served by the cell in question and the MSs could be better served by other HLA cells or the withdrawal will improve overall operational efficiency of the system 100.

Thus, in accordance with the embodiments of the invention described above, the system 100 operates to dynamically update the HLA lists held by MSs operating in the system 100. This allows (i) service links to MSs that are to take part in group calls to be improved without unduly overloading the system 100 with control and traffic signals sent to and from such MSs; and/or (ii) the operational efficiency of the system 100 to be improved according to currently operational conditions, without unduly reducing the service links to MSs.

The invention may beneficially be employed in any cellular/trunked mobile communication system which provides group calls between MSs operating in the system. For example, the invention may be applied, as well as in TETRA systems as mentioned earlier, in systems operating in accordance with the APCO 25 standard, in Motorola iDEN^{R} systems, in GSM-R systems (GSM cellular telephony systems adapted for use on railways to carry group calls) or in 'PTT over cellular' systems which are able to use group downlink transmissions.

In the foregoing specification, specific embodiments of the present invention have been described. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a", "has ...a", "includes ... a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

## Claims

1. A cellular communication system (100) including a plurality of mobile stations (109, 115, 119) and a system infrastructure (157, 103, 105, 107) operable to support communications between the mobile stations, the infrastructure being organized in a plurality of cells such that each of the mobile stations is served by a selected one of the cells, wherein:
(i) each of the mobile stations is operable to store in a memory (206) of the mobile station a list of preferred cells selected and recorded by the infrastructure according to a distribution, among cells serviced by the infrastructure, of usual locations of mobile stations of a pre-defined group, to steer the mobile station to select one of the cells in the list for attachment in a call with the pre-defined group;
(ii) a processor (161) of the infrastructure is operable dynamically to make a temporary update to the list of preferred cells according to current system conditions, comprising adding a previously non-preferred cell to the list of preferred cells, and to notify mobile stations of the pre-defined group of the temporary update; and
(iii) each of the notified mobile stations of the pre-defined group is operable to store the temporary update to the list of preferred cells.

2. A system (100) according to claim 1 wherein:
each of the mobile stations (109, 115, 119) is operable to use the updated list when it is to take part in a call with the group.

3. A system (100) according to claim 1 wherein:
the processor (161) is operable to update the list of preferred cells when one of the mobile stations of the group has been unable to receive service from any of the cells of its preferred list and is receiving service from a cell which is not on the preferred list, the update thereby including that cell in the updated list.

4. A system (100) according to claim 1, claim 2 or claim 3 wherein:
the processor (161) is operable to provide the dynamic update in response to receiving information from at least one of the mobile stations of the group relating to the quality or strength of signals received from cells of the system (100).

5. A system (100) according to any one of claims 1 to 4 wherein:
the processor (161) is operable to notify mobile stations (109,115,119) of the group of the update by sending (309) a broadcast message to targeted mobile stations of the group.

6. A system (100) according to claim 5 wherein:
the processor (161) is operable to send the broadcast message on one of a control channel and in a control signalling opportunity on a traffic channel.

7. A system (100) according to claim 5 or claim 6 wherein:
the processor (161) is operable to include in the broadcast message an indication that a change to the preferred list is a temporary change.

8. A system (100) according to claim 7 wherein:
the processor (161) is operable to include in the broadcast message an indication of the period of time during which the temporary change will apply.

9. A system (100) according to claim 7 or claim 8 wherein:
the processor (161) is operable to withdraw (319) a temporary change to the preferred list when a pre-defined event occurs.

10. A system (100) according to claim 9 wherein the predefined event is at least one of:
(i) expiry of a pre-determined time period;
(ii) one or more of the mobile stations (109, 115, 119) ceasing to be served by a cell which was newly included in the updated list of preferred cells.

11. A system (100) according to any one of claims 7 to 10 wherein:
at the end of a period during which the temporary change applies, the mobile stations served by a cell which was newly included in the updated list of preferred cells are operable to seek service by one of the cells of the previous preferred list rather than the newly added cell.

12. A system (100) according to any one of the preceding claims wherein:
the system (100) is a TETRA system and the list is a Home Location Area list.

13. A mobile station (109) operable in the system (100) according to any one of the preceding claims wherein:
each mobile station is operable to attach (305) for service for a given group call with the pre-defined group to a cell that is not normally in its list of preferred cells for the pre-defined group.

14. A mobile station according to claim 12 wherein:
the mobile station is operable to attach (305) to the cell not normally in its list of preferred cells in response to receiving a signal from the system infrastructure indicating that the cell not normally in the list of preferred cells may be included temporarily in the list of preferred cells.

15. A method (300) of operation in a cellular communication system (100) including a plurality of mobile stations and a system infrastructure operable to support communications between the mobile stations, the infrastructure being organized in a plurality of cells such that each of the mobile stations is served by a selected one of the cells, wherein the method includes:
(i) each of the mobile stations being operable to select for service, for group communications with a pre-defined group of the mobile stations, a cell which is in a list of preferred cells selected and recorded by the infrastructure according to a distribution of usual locations of mobile stations of the group among cells serviced by the infrastructure, and which list has been stored in a memory of the mobile station;
(ii) a processor (161) of the infrastructure dynamically making a temporary update to the list of preferred cells according to current system conditions, comprising adding a previously non-preferred cell to the list of preferred cells, and notifying (309) mobile stations of the pre-defined group of the temporary update; and
(iii) each of the notified mobile stations of the pre-defined group storing the temporary update to the list of preferred cells, and mobile stations of the pre-defined group using (311) the temporarily updated list for a call in the pre-defined group.

## Patentansprüche

1. Zellulares Kommunikationssystem (100), umfassend eine Vielzahl Mobilstationen (109, 115, 119) und eine Systeminfrastruktur (157, 103, 105, 107), betreibbar, Kommunikationen zwischen den Mobilstationen zu unterstützen, wobei die Infrastruktur in einer Vielzahl von Zellen organisiert ist, so dass jede der Mobilstationen durch eine Ausgewählte der Zellen bedient wird, wobei:
(i) jede der Mobilstationen betreibbar ist, eine Liste bevorzugter, von der Infrastruktur nach einer Verteilung, unter von der Infrastruktur bedienter Zellen, üblicher Standorte von Mobilstationen einer vordefinierten Gruppe ausgewählter und aufgezeichneter Zellen in einem Speicher (206) der Mobilstationen zu speichern, um die Mobilstation zu steuern eine der Zellen in der Liste für einen Anschluss an einen Anruf innerhalb der vordefinierten Gruppe auszuwählen;
(ii) ein Prozessor (161) der Infrastruktur dynamisch betreibbar ist, ein temporäres Update an der Liste bevorzugter Zellen nach aktuellen Systemzuständen vorzunehmen, umfassend Hinzufügen einer zuvor nicht-bevorzugten Zelle zu der Liste der bevorzugten Zellen, und um Mobilstationen über die vordefinierte Gruppe des temporären Updates zu benachrichtigen; und
(iii) jede der benachrichtigten Mobilstationen der vordefinierten Gruppe betreibbar ist, um das temporäre Update in der Liste der bevorzugten Zellen zu speichern.

2. System (100) nach Anspruch 1, wobei:
jede der Mobilstationen (109, 115, 119) betreibbar ist, die aktualisierte Liste zu nutzen, wenn sie an einem Anruf mit der Gruppe teilnimmt.

3. System (100) nach Anspruch 1, wobei:
der Prozessor (161) betreibbar ist, die Liste der bevorzugten Zellen zu aktualisieren, wenn eine der Mobilstationen der Gruppe unfähig ist, einen Service von irgendeiner der Zellen ihrer bevorzugten Liste zu empfangen und einen Service von eine Zelle empfängt, die nicht der Liste der bevorzugten Zellen angehört, wobei das Update die Zelle dadurch in die aktualisierte Liste aufnimmt.

4. System (100) nach Anspruch 1, Anspruch 2 oder Anspruch 3, wobei:
der Prozessor (161) betreibbar ist, das dynamische Update in Reaktion auf einen Empfang von Informationen von zumindest einer der Mobilstationen aus der Gruppe betreffend die Qualität oder Stärke des von den Zellen des Systems (100) empfangenen Signals bereitzustellen.

5. System (100) nach einem der Ansprüche 1 bis 4, wobei:
der Prozessor (161) betreibbar ist, Mobilstationen (109, 115, 119) aus der Gruppe über das Update durch Senden (309) einer Rundfunknachricht an ausgewählte Mobilstationen aus der Gruppe zu benachrichtigen.

6. System (100) nach Anspruch 5, wobei:
der Prozessor (161) betreibbar ist, die Rundfunknachricht auf einem von einem Steuerkanal und in einer Steuersignalmöglichkeit auf einem Verkehrskanal zu senden.

7. System (100) nach Anspruch 5 oder 6, wobei:
der Prozessor (161) betreibbar ist, in die Rundfunknachricht einen Hinweis einzubinden, dass ein Wechsel zu der bevorzugten Liste ein temporärer Wechsel ist.

8. System (100) nach Anspruch 7, wobei:
der Prozessor (161) betreibbar ist, in die Rundfunknachricht einen Hinweis über den Zeitraum einzubinden, währenddessen der temporäre Wechsel vollzogen wird.

9. System (100) nach Anspruch 7 oder Anspruch 8, wobei:
der Prozessor (161) betreibbar ist, einen temporären Wechsel von der bevorzugten Liste zu streichen (319), wenn ein vordefiniertes Ereignis eintritt.

10. System (100) nach Anspruch 9, wobei das vordefinierte Ereignis zumindest eines der Folgenden ist:
(i) Ablauf eines vorbestimmten Zeitraums;
(ii) eine oder mehrere der Mobilstationen (109, 115, 119) nicht mehr von einer Zelle bedient werden, die neu in die aktualisierte Liste der bevorzugten Zellen aufgenommen wurde.

11. System (100) nach einem der Ansprüche 7 bis 10, wobei:
an einem Ende eines Zeitraums, währenddessen der temporäre Wechsel vollzogen wird, die Mobilstationen, die von einer Zelle bedient werden, die neu in die aktualisierte Liste bevorzugter Zellen aufgenommen wurde, betreibbar sind, einen Service eher von einer Zelle der vormals bevorzugten Liste als von der neu hinzugefügte Zelle zu suchen.

12. System (100) nach einem der vorangehenden Ansprüche, wobei:
das System (100) ein TETRA-System und die Liste eine Heimatstandortregionsliste ist.

13. Mobilstation (109), betreibbar in einem System (100) nach einem der vorangehenden Ansprüche, wobei:
jede der Mobilstationen betreibbar ist, sich für einen Service eines bestimmten Gruppenanrufs mit der vordefinierten Gruppe an eine Zelle, die normalerweise nicht in ihrer Liste der bevorzugten Zellen für die vordefinierte Gruppe ist, anzuschließen (305).

14. Mobilstation nach Anspruch 12, wobei:
die Mobilstation betreibbar ist, sich der Zelle, die normalerweise nicht in ihrer Liste der bevorzugten Zellen ist, in Reaktion auf einen Empfang eines Signals von der Systeminfrastruktur, das anzeigt, dass die Zelle, die normalerweise nicht in der Liste der bevorzugten Zellen vorgesehen ist, temporär in die Liste der bevorzugten Zellen aufgenommen werden kann, anzuschließen (305).

15. Verfahren (300) zum Betrieb in einem zellularen Kommunikationssystem (100), umfassend eine Vielzahl Mobilstationen und eine Systeminfrastruktur, die betreibbar ist, eine Kommunikation zwischen den Mobilstationen zu unterstützen, wobei die Infrastruktur in einer Vielzahl von Zellen organisiert ist, so dass jede der Mobilstationen durch eine Ausgewählte der Zellen bedient wird, wobei das Verfahren umfasst:
(i) jede der Mobilstationen ist betreibbar, für einen Service, für eine Gruppenkommunikation mit einer vordefinierten Gruppe der Mobilstationen, eine Zelle, die in einer Liste bevorzugter Zellen, die durch die Infrastruktur nach einer Verteilung üblicher Standorte von Mobilstationen aus der Gruppe unter Zellen, die von der Infrastruktur bedient werden, ausgewählt und aufgenommen sind, auszusuchen, und wobei die Liste in einem Speicher der Mobilstation gespeichert ist,
(ii) einen Prozessor (161) der Infrastruktur, der dynamisch eine temporäres Update an der Liste bevorzugter Zellen nach den gegenwärtigen Systembedingungen vornimmt, umfassend Hinzufügen eine vormals nicht-bevorzugten Zelle zu der Liste bevorzugter Zellen, und Benachrichtigen (309) der Mobilstationen der vordefinierten Gruppe über das temporäre Update; und
(iii) jede der benachrichtigten Mobilstationen der vordefinierten Gruppe speichert das temporäre Update der Liste der bevorzugten Zellen, und Mobilstationen der vordefinierten Gruppe nutzen (311) die temporär aktualisierte Liste für einen Anruf in der vordefinierten Gruppe.

## Revendications

1. Système de communication cellulaire (100) comprenant une pluralité de stations mobiles (109, 115, 119) et une infrastructure de système (157, 103, 105, 107) pouvant être utilisée pour prendre en charge les communications entre les stations mobiles, l'infrastructure étant organisée en une pluralité de cellules de sorte que chacune des stations mobiles soit desservie par l'une sélectionnée des cellules, dans lequel :
(i) chacune des stations mobiles peut être utilisée pour mémoriser, dans une mémoire (206) de la station mobile, une liste de cellules préférées sélectionnées et enregistrées par l'infrastructure en fonction d'une distribution, parmi les cellules desservies par l'infrastructure, des emplacements habituels des stations mobiles d'un groupe prédéfini, pour piloter la station mobile pour sélectionner l'une des cellules dans la liste pour un attachement dans un appel avec le groupe prédéfini ;
(ii) un processeur (161) de l'infrastructure peut être utilisé dynamiquement pour effectuer une mise à jour temporaire de la liste de cellules préférées en fonction des conditions de système actuelles, comprenant l'ajout d'une cellule précédemment non préférée à la liste de cellules préférées, et pour notifier aux stations mobiles du groupe prédéfini la mise à jour temporaire ; et
(iii) chacune des stations mobiles notifiées du groupe prédéfini peut être utilisée pour mémoriser la mise à jour temporaire de la liste de cellules préférées.

2. Système (100) selon la revendication 1, dans lequel :
chacune des stations mobiles (109, 115, 119) peut être utilisée pour utiliser la liste mise à jour lorsqu'elle doit prendre part à un appel avec le groupe.

3. Système (100) selon la revendication 1, dans lequel :
le processeur (161) peut être utilisé pour mettre à jour la liste de cellules préférées lorsque l'une des stations mobiles du groupe a été incapable de recevoir un service de l'une quelconque des cellules de sa liste préférée et reçoit un service d'une cellule qui n'est pas dans la liste préférée, la mise à jour incluant de ce fait cette cellule dans la liste mise à jour.

4. Système (100) selon la revendication 1, la revendication 2 ou la revendication 3, dans lequel :
le processeur (161) peut être utilisé pour fournir la mise à jour dynamique en réponse à la réception d'informations d'au moins l'une des stations mobiles du groupe concernant la qualité ou l'intensité des signaux reçus des cellules du système (100).

5. Système (100) selon l'une quelconque des revendications 1 à 4, dans lequel :
le processeur (161) peut être utilisé pour notifier aux stations mobiles (109, 115, 119) du groupe la mise à jour en envoyant (309) un message de diffusion à des stations mobiles ciblées du groupe.

6. Système (100) selon la revendication 5, dans lequel :
le processeur (161) peut être utilisé pour envoyer le message de diffusion soit sur un canal de contrôle, soit dans une opportunité de signalisation de contrôle sur un canal de trafic.

7. Système (100) selon la revendication 5 ou la revendication 6, dans lequel :
le processeur (161) peut être utilisé pour inclure, dans le message de diffusion, une indication qu'un changement de la liste préférée est un changement temporaire.

8. Système (100) selon la revendication 7, dans lequel :
le processeur (161) peut être utilisé pour inclure, dans le message de diffusion, une indication de la période de temps pendant laquelle le changement temporaire s'appliquera.

9. Système (100) selon la revendication 7 ou la revendication 8, dans lequel :
le processeur (161) peut être utilisé pour retirer (319) un changement temporaire de la liste préférée lorsqu'un événement prédéfini se produit.

10. Système (100) selon la revendication 9, dans lequel l'événement prédéfini est au moins l'une :
(i) de la fin d'une période de temps prédéterminée ;
(ii) de la fin du service d'une ou de plusieurs des stations mobiles (109, 115, 119) par une cellule qui a été nouvellement incluse dans la liste mise à jour de cellules préférées.

11. Système (100) selon l'une quelconque des revendications 7 à 10, dans lequel :
à la fin d'une période pendant laquelle le changement temporaire s'applique, les stations mobiles desservies par une cellule qui a été nouvellement incluse dans la liste mise à jour de cellules préférées peuvent être utilisées pour rechercher un service par l'une des cellules de la liste préférée précédente plutôt que par la cellule nouvellement ajoutée.

12. Système (100) selon l'une quelconque des revendications précédentes, dans lequel :
le système (100) est un système TETRA et la liste est une liste de zones d'emplacements nominaux.

13. Station mobile (109) pouvant être utilisée dans le système (100) selon l'une quelconque des revendications précédentes, dans laquelle :
chaque station mobile peut être utilisée pour s'attacher (305) pour un service pour un appel de groupe donné avec le groupe prédéfini à une cellule qui n'est pas normalement dans sa liste de cellules préférées pour le groupe prédéfini.

14. Station mobile selon la revendication 12, dans laquelle
la station mobile peut être utilisée pour s'attacher (305) à la cellule qui n'est pas normalement dans sa liste de cellules préférées en réponse à la réception d'un signal de l'infrastructure de système indiquant que la cellule qui n'est pas normalement dans la liste de cellules préférées peut être incluse temporairement dans la liste de cellules préférées.

15. Procédé (300) de fonctionnement dans un système de communication cellulaire (100) comprenant une pluralité de stations mobiles et une infrastructure de système pouvant être utilisée pour prendre en charge les communications entre les stations mobiles, l'infrastructure étant organisée en une pluralité de cellules de sorte que chacune des stations mobiles soit desservie par l'une sélectionnée des cellules, dans lequel procécé :
(i) chacune des stations mobiles peut être utilisée pour sélectionner pour un service, pour des communications de groupe avec un groupe prédéfini des stations mobiles, une cellule qui est dans une liste de cellules préférées sélectionnées et enregistrées par l'infrastructure en fonction d'une distribution des emplacements habituels des stations mobiles du groupe parmi les cellules desservies par l'infrastructure, laquelle liste a été mémorisée dans une mémoire de la station mobile ;
(ii) un processeur (161) de l'infrastructure effectue dynamiquement une mise à jour temporaire de la liste de cellules préférées en fonction des conditions de système actuelles, comprenant l'ajout d'une cellule précédemment non préférée à la liste de cellules préférées, et la notification (309) aux stations mobiles du groupe prédéfini de la mise à jour temporaire ; et
(iii) chacune des stations mobiles notifiées du groupe prédéfini mémorise la mise à jour temporaire de la liste de cellules préférées, et les stations mobiles du groupe prédéfini utilisent (311) la liste temporairement mise à jour pour un appel dans le groupe prédéfini.
